# EUROPEAN PATENT APPLICATION

(11) **EP 2 037 155 A2**
(43) Date of publication of application: **18.03.2009**
(21) Application number: 08015751.4
(22) Date of filing: 06.09.2008
(51) Int. Cl.: F16H 57/04

(54) **Lubricating oil supply device**

(30) Priority: 12.09.2007 JP 2007237021
(71) Applicant: AISIN AI Co., Ltd., Nishio-shi, Aichi-ken (JP)
(72) Inventor: Kawamoto, Masaki, Nishio-shi Aichi-ken (JP); Kayukawa, Norio, Nishio-shi Aichi-ken (JP); Ogami, Shiro, Nishio-shi Aichi-ken (JP); Tanba, Toshio, Nishio-shi Aichi-ken (JP)
(74) Representative: Serjeants

(57) **Abstract**

A lubricating oil supply device includes a casing (10) including a cylindrical bore (12) and a guide passage (13) whose one end opens to an inside of the casing (10) and whose the other end opens to the cylindrical bore (12), a rotational shaft (15) including a center bore (17), an accommodating groove (18), and a discharge passage (17a) which corresponds to the guide passage (13) and whose one end opens to the accommodating groove (18) and whose the other end opens to the center bore (17), and a lubricating oil guiding member (20) accommodated within the accommodating groove (18) and including a cylindrical portion (21), a guide hole (22), which has a first inner side surface (22a) connected to an outer circumferential surface (21a) of the cylindrical portion (21) so as to form an angle therebtween and a second inner side surface (22b) and which is always connected to the discharge passage (17a), and a guide groove (23) extending along the outer circumferential surface of the lubricating oil guiding member (20).

## Description

### FIELD OF THE INVENTION

The present invention relates to a lubricating oil supply device for supplying lubricating oil to an inside of a rotational shaft.

### BACKGROUND

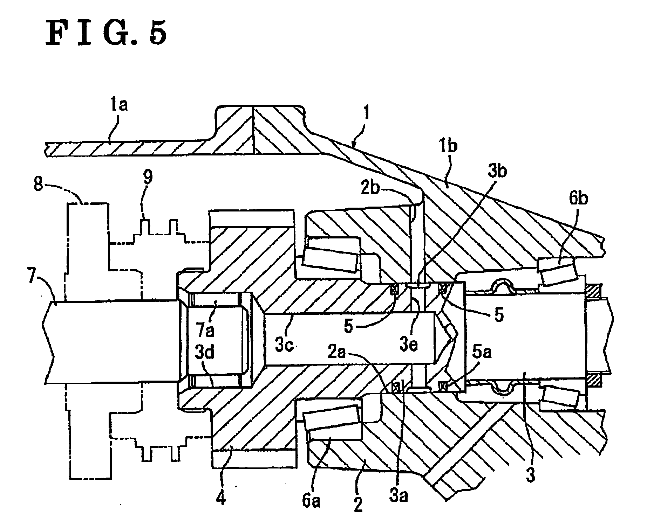

Conventionally, lubricating oil is supplied to an inside of a rotational shaft such as an input shaft, a counter shaft, an output shaft and the like of a transmission apparatus from an end portion or from an outer circumference of the rotational shaft. In a case where other components are provided at both end portions of the rotational shaft, the lubricating oil may not be able to be supplied to the inside of the rotational shaft from the end portion thereof, and the lubricating oil needs to be supplied to the inside of the rotational shaft from the outer circumference thereof. Fig. 5 illustrates a conventional lubricating oil supply device for supplying the lubricating oil to the inside of the rotational shaft, whose both ends are provided with other components, as an example of the know arts. In the conventional lubricating oil supply device illustrated in Fig. 5, an output shaft 3 is supported at a transmission housing 1 via a pair of first tapered roller bearings 6a and second tapered roller bearings 6b. An input shaft 7 is coaxially arranged relative to the output shaft 3, and one end portion of the input shaft 7 is rotatably supported at a bearing hole 3d, coaxially formed at an inner end portion of the output shaft 3, via a needle roller bearing 7a (a portion necessitating lubrication). A plural pairs of shift gear sets (only a shift driving gear 8 of the plural pairs of shift gear sets is illustrated in Fig. 5) are provided between the input shaft 7 and a counter shaft (not shown), arranged in parallel to the output shaft 3 and the input shaft 7. Further, a reduction gear set (only a reduction driven gear 4 is illustrated in Fig. 5) is provided between the output shaft 3 and the counter shaft. A rotation of the input shaft 7 is transmitted to the output shaft 3 in a manner where the rotation of the input shaft 7 is transmitted to the counter shaft by a selected pair of synchromesh mechanism out of a plural synchromesh mechanism (only a selected pair of a synchromesh mechanism 9 is illustrated in Fig. 5), and then the rotation of the input shaft 7 is transmitted from the counter shaft to the output shaft 3 via the reduction gear set. Alternatively, the rotation of the input shaft 7 may be directly transmitted to the output shaft 3 by directly connecting the input shaft 7 and the output shaft 3 by means of the synchromesh mechanism 9.

An intermediate portion 3a of the output shaft 3 is rotatably fitted into an inner hole 2a of a boss portion 2 formed at the transmission housing 1. A center bore 3c, having a smaller diameter than a diameter of the bearing hole 3d, is coaxially formed at the output shaft 3 so as to continuously extend from the bearing hole 3d in an axial direction of the output shaft 3. An annular groove 3b is formed at an outer circumference of the intermediate portion 3a of the output shaft 3. The annular groove 3b spatially extends to the center bore 3c via a fluid communication bore 3e for establishing a flow of the lubricating oil therebetween. A guide passage is formed at an upper portion of a base portion of the boss portion so as to extend orthogonally to the axial direction of the output shaft 3 for establishing the connection between space of an inside of the transmission housing 1 and the annular groove 3b. Seal materials 5a are provided within seal grooves 5 formed at the outer circumference of the intermediate portion 3a of the output shaft 3 at positions corresponding to both sides of the annular groove 3b in the axial direction of the output shaft 3.

In the conventional lubricating oil supply device, the lubricating oil spattered within the transmission housing 1 lubricates the bearing 7a supporting the end portion of the input shaft 7 at the inner end portion of the output shaft 3 by guiding the spattered lubricating oil to the annular groove 3b through a guide passage 2b and to the center bore 3c via the fluid communication bore 3e.

However in the lubricating oil device having the above-described configuration, centrifugal force is applied to the lubricating oil contained within the rotating output shaft 3, which results in preventing the lubricating oil, guided from the guide passage 2b, from entering the center bore 3c through the fluid communication bore 3e. Specifically when the output shaft 3 is rotated at high-speed, the centrifugal force is increased, thereby decreasing a supply of the lubricating oil to a portion to be lubricated (hereinafter referred to as a lubrication necessitating portion) such as the bearing 7a and the like. As a result, the lubrication necessitating portion may not be sufficiently lubricated. In order to eliminate the drawback mentioned above, an oil pump may be separately provided at the lubricating oil supply device to pressurize the lubricating oil and supply the pressurized lubricating oil to the guide passage 2b. However, providing the oil pump may increase manufacturing costs of the lubricating oil supply device.

A need thus exists to provide a lubricating oil supply device which surely and appropriately supplies lubricating oil to an inside of a rotational shaft and which is achievable at low costs.

### SUMMARY OF THE INVENTION

According to an aspect of the present invention, a lubricating oil supply device includes a casing, a rotational shaft rotatably supported by the casing, a center bore formed at the rotational shaft, an accommodating groove formed at an outer circumference of an intermediate portion of the rotational shaft in an annular-shape, a cylindrical bore coaxially formed in the casing relative to the rotational shaft, the cylindrical bore formed in the casing at a position corresponding to the intermediate portion of the rotational shaft, a guide passage radially extending through a portion of the casing so that one end of the guide passage opens to an inside of the casing and the other end of the guide passage opens to a portion of the cylindrical bore, a discharge passage formed at the rotational shaft at a position corresponding to a position where the guide passage is formed, one end of the discharge passage opening to a bottom surface of the accommodating groove and the other end of the discharge passage opening to the center bore of the rotational shaft, and a lubricating oil guiding member accommodated within the accommodating groove and including a cylindrical portion, which extends in a circumferential direction, the lubricating oil guiding member rotated with the rotational shaft so as to slidably contact the cylindrical bore at an outer circumferential surface of the cylinder portion, wherein the lubricating oil guiding member further includes a guide hole, which has a first inner side surface and a second inner side surface facing each other in the circumferential direction of the lubricating oil guiding member, so that the guide hole is always connected to the discharge passage to establish the fluid communication therebetween, the first inner side surface is connected to an outer circumferential surface of the cylindrical portion so as to form an angle therebetween, and the lubricating oil guiding member further includes a guide groove extending along the outer circumferential surface of the lubricating oil guiding member and ending at an end surface formed at the lubricating oil guiding member at a position away from the first inner side surface, the guide groove is connected to the guide hole at a portion where the second inner side surface is formed so as to establish the fluid communication therebetween.

Accordingly, although the lubricating oil guiding member is rotated together with the rotational shaft, a flowing speed of a lubricating oil flowing farther from an axis of the rotational shaft is slowed relative to the flowing speed of the lubricating oil flowing closer to the outer circumferential surface of the lubricating oil guiding member because of the viscous friction generated between the lubricating oil existing within the rotating lubricating oil guiding member and the lubricating oil existing within the cylindrical bore. As a result, the lubricating oil is moved towards the first inner side surface formed at the guide hole when the rotational shaft is rotated in the positive direction. The lubricating oil hits the first inner side surface, which is connected to the outer circumferential surface of the cylindrical portion and forms the angle relative to the outer circumferential surface thereof, so that the lubricating oil is smoothly directed inwardly in the radial direction thereof. Accordingly, the lubricating oil is guided to the center bore through the discharge passages so as to resist against a centrifugal force generated by a rotation of the rotational shaft, thereby lubricating a portion necessitating lubrication. Further, only the lubricating oil guiding member is additionally provided at the conventional lubricating oil supply device. Therefore, the lubricating oil supply device appropriately and surely lubricating the portion necessitating lubrication is achieved with a few additional manufacturing costs.

According to another aspect of the present invention, the lubricating oil guiding member is rotated with the rotational shaft by engaging a protrusion or a recessed portion, formed at an inner circumferential surface of the lubricating oil guiding portion or the cylindrical portion, with a recessed portion or a protrusion, formed at the bottom surface of the accommodating groove or a portion of the accommodating groove corresponding to the cylindrical portion.

Accordingly, a connecting structure of the lubricating oil guiding member relative to the rotational shaft is achieved with a simple structure. Further, the lubricating oil guiding member is structured to be rotated with the rotational shaft when the lubricating oil guiding member is assembled on the rotational shaft only by engaging the protrusion and the recessed portion.

According to a further aspect of the present invention, the lubricating oil guiding member is made of synthetic resin, having abrasion resistance and elasticity, and is formed in a C-shape by providing a cut at a portion of the lubricating oil guiding member in the circumferential direction thereof so that the cut extends in the axial direction of the rotational shaft, so that the lubricating oil guiding member elastically contacts the inner circumferential surface of the casing corresponding to a position where the cylindrical bore is formed.

The lubricating oil guiding member is made of the synthetic resin having the abrasion resistance and the elasticity. Further, the lubricating oil guiding member is formed to have the C-shape by providing the cut thereat, and the outer circumferential surface of the lubricating oil guiding member elastically contacts the inner circumferential surface of the casing corresponding to the cylindrical bore, thereby forming very little clearance therebetween. As a result, the amount of the lubricating oil, moving through the lubricating oil guiding member, leaking outward therefrom is greatly reduced.

According to a further aspect of the present invention, the cut is provided at a position corresponding to the guide hole formed at the lubricating oil guiding member so that one end surface of the cut is arranged so as to correspond to the first inner side surface.

The cut is formed at the position corresponding to the guide hole so that the one side surface of the cut is inclined so as to correspond to an inclination of one of the first inner side surface. Accordingly, the first inner side surface, which is connected to the outer circumferential surface that are formed at the outermost positions in the radial direction of the cylindrical portion and which changes a moving direction of the lubricating oil inwardly in the radial direction of the lubricating oil guiding member, closely contacts the inner circumferential surface of the inner circumferential surface of the casing corresponding to the cylindrical bore. Therefore, the lubricating oil is effectively directed inwardly in the radial direction of the lubricating oil guiding member while reducing an amount of leakage of the lubricating oil to a minimum.

According to a further aspect of the present invention, the lubricating oil guiding member includes two of the cylindrical portions extending along the circumferential direction of the lubricating oil guiding member, a pair of annular protruding portions is provided at an inner circumferential surface of the pair of cylindrical portions, respectively, so as to extend along both sides of the guide hole, and a pair of annular grooves is formed at the bottom surface of the accommodating groove for accommodating the pair of the annular protruding portions, respectively.

The pair of annular protruding portions protruding inwardly in the radial direction of the lubricating oil guiding member is provided at the pair of the cylindrical portions, respectively, so as to be arranged at the positions corresponding to the both sides of the guide hole. Further, the pair of annular grooves for accommodating the corresponding annular protruding portions is formed at the bottom surface of the accommodating groove. Accordingly, a contacting force of the outer circumferential surface of the lubricating oil guiding member relative to the cylindrical bore is easily modified by modifying a size of the annular protruding portions.

According to a further aspect of the present invention, at least one of outer side surfaces of the pair of cylindrical portions facing opposite direction from each other is provided with a first sealing protrusion that is formed in an annular-shape and slidably contacts a corresponding inner side surface of the accommodating grove, and at least one of inner side surfaces of the annular protruding portions facing each other is provided with a second sealing protrusion that is formed in an annular-shape and slidably contacts a corresponding inner side surface of the annular groove facing inward the lubricating oil guiding member.

The first sealing protrusion, which slidably contacts one of the inner side surfaces of the accommodating groove facing each other in the axial direction of the rotational shaft, is formed at the outer side surface of at least one of the cylindrical portions facing opposite direction from each other in the axial direction of the rotational shaft. Further, the second sealing protrusion, which slidably contacts the inner side surface of the annular groove, is formed at the inner side surface of at least one of the annular protruding portions. Accordingly, in a case where the lubricating oil guiding member is offset to one side in the axial direction of the rotational shaft relative to the accommodating groove and where the first sealing protrusion is positioned away from the corresponding inner side surface of the accommodating groove, the second sealing protrusion formed at the annular protruding portion corresponding to the first sealing protrusion contacts the corresponding inner side surface of the annular groove. As a result, leakage of the lubricating oil, occurring due to the offset of the lubricating oil guiding member to one side in the axial direction of the rotational shaft, is prevented from occurring.

According to a further aspect of the present invention, the center bore is provided at the rotational shaft so as to open to an inner end surface thereof, a bearing hole having a larger diameter than a diameter of the center bore is formed at a position where the center bore opens towards the inner end surface of the rotational shaft, and an end portion of another rotational shaft, arranged in the coaxial manner with respect to the rotational shaft, is rotatably supported at the bearing hole via a bearing, thereby transmitting a shifted rotation of the another rotational shaft to the rotational shaft.

The rotational shaft includes the center bore opening to the inner end surface of the rotational shaft. Further, an end portion of the another rotational shaft coaxially arranged relative to the rotational shaft is rotatably supported at the bearing hole, which is formed at the opening of the center bore so as to integrally extend towards the center bore and which is formed to have a larger diameter than a diameter of the center bore, via the bearing, so that the shifted rotation of the another rotational shaft is transmitted to the rotational shaft. Accordingly, the bearing, which is provided between the rotational shaft and the another rotational shaft and at which a lack of lubrication occurs because the lubricating oil is hard to be supplied thereto, is appropriately lubricated.

According to a further aspect of the present invention, the first inner side surface is connected to the outer circumferential surface of the cylinder portion and forms an acute angle relative to the outer circumferential surface at an edge portion of the first inner side surface.

Accordingly, the lubricating oil flowing in the guide groove is smoothly directed towards the center bore via the discharge hole.

### BRIEF DESCRIPTION OF THE DRAWINGS

The foregoing and additional features and characteristics of the present invention will become more apparent from the following detailed description considered with the reference to the accompanying drawings, wherein:

Fig. 1 is a vertical cross-sectional view illustrating a configuration of main parts of a lubricating oil supply device for supplying lubricating oil to an inside of a rotational shaft according to an embodiment;

Fig. 2 is a cross-sectional view taken along line II-II in Fig. 1;

Fig. 3 is a partially enlarged view of the cross-sectional view illustrated in Fig. 2;

Fig. 4 is a cross-sectional view taken along line IV-VI in Fig. 3; and

Fig. 5 is a vertical cross-sectional view illustrating an example of a conventional lubricating oil supply device for supplying lubricating oil to an inside of a rotational shaft.

### DETAILED DESCRIPTION

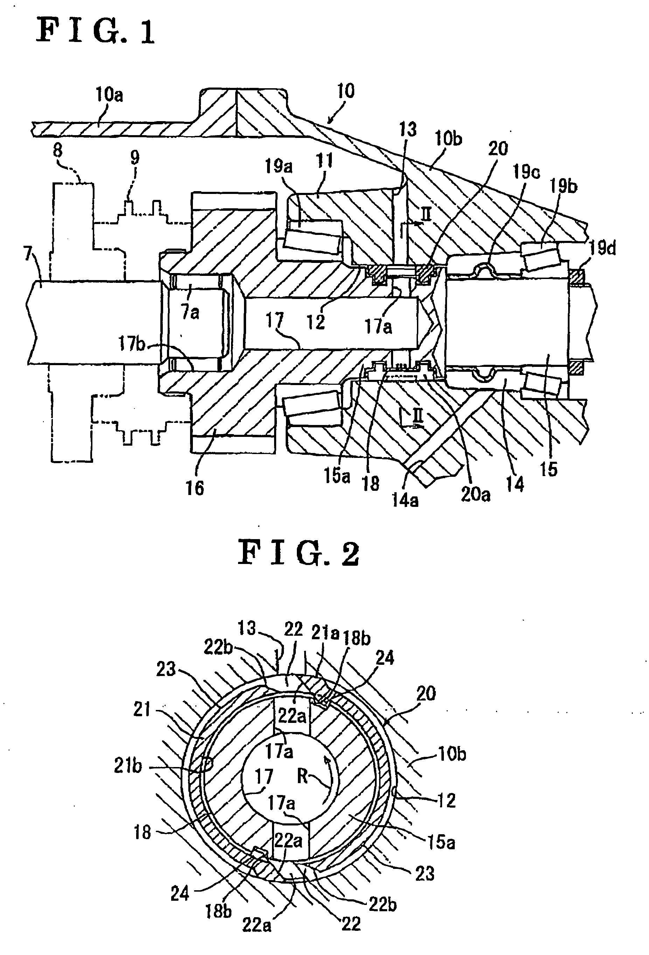

An embodiment of a lubricating oil supply device for supplying lubricating oil to an inside of a rotational shaft of, for example, a transmission apparatus will be described below in accordance with Figs. 1 to 4 of the attached drawings. In this embodiment, the lubricating oil supply device is adapted to supply the lubricating oil to a bearing 7a provided between an input shaft 7 and an output shaft 15 of the transmission mounted on an automobile. In this embodiment, the lubricating oil supply device is structured mainly by a transmission housing 10 (a casing), the output shaft 15 (a rotational shaft) rotatably supported by the transmission housing 10, the input shaft 7 (a rotational shaft) whose end portion is rotatably supported at the output shaft 15 via the needle roller bearing 7a (bearing), a lubricating oil guiding member 20 provided within an accommodating groove 18 formed at the output shaft 15, a first guide passage 13 for guiding the lubricating oil to the lubricating oil guiding member 20, a center bore 17 formed at the output shaft 15, and discharge passages 17a for supplying the lubricating oil from the lubricating oil guiding member 20 to the center bore 17.

As illustrated in Fig. 1, the transmission housing 10 of the transmission apparatus is formed by an intermediate casing portion 10a and an end casing portion 10b, which are integrally bolted together. The output shaft 15 is rotatably supported at the end casing portion 10b via a pair of first tapered roller bearing 19a and second tapered roller bearing 19b. A bearing hole 17b is coaxially formed at an inner end portion of the output shaft 15, which is positioned within the transmission housing 10, so as to have an opening towards the input shaft 7 in an axial direction of the output shaft 15. The center bore 17 whose diameter is smaller than a diameter of the bearing hole 17b is formed so as to coaxially extend from the bearing hole 17b towards opposite direction from the input shaft 7. In other words, the center bore 17 is opened to an inner end circumferential surface of the output shaft 15, at which the bearing hole 17b is formed, via the bearing hole 17b. Further, a reduction driven gear 16 is integrally formed at an outer circumference of the output shaft 15 in vicinity of a position corresponding to the inner end circumferential surface at which the bearing hole 17b is opened.

The input shaft 7, coaxially arranged relative to the output shaft 15, and the end portion of the input shaft 7 is rotatably supported at the bearing hole 17b, formed at the inner end portion of the output shaft 15 via the needle roller bearing 7a. A plural pairs of shift gear sets are provided between the input shaft 7 and a counter shaft (not shown), arranged in parallel to the input shaft 7 and the output shaft 15. In Fig. 1, only a shift driving gear 8 is illustrated. Further, a pair of reduction gears is provided between the output shaft 15 and the counter shaft. In Fig. 1, only the reduction driven gear 16 is illustrated. A rotation of the input shaft 7 is transmitted to the output shaft 3 in a manner where the rotation of the input shaft 7 is transmitted to the counter shaft by a selected pair of synchromesh mechanism out of a plural synchromesh mechanism (only the selected pair of synchromesh mechanism 9 is illustrated in Fig. 1), and then the rotation of the input shaft 7 is transmitted from the counter shaft to the output shaft 3 via the reduction gear set. Alternatively, the rotation of the input shaft 7 is directly transmitted to the output shaft 3 by directly connecting the input shaft 7 and the output shaft 3 by means of the synchromesh mechanism 9.

The portion of the output shaft 15 at the right side than the reduction driven gear 16 in Fig. 1 has a plural steps formed coaxial with the output shaft 15 so that thickness of the output shaft 15 becomes thinner towards the right side from the reduction driven gear 16. The output shaft 15 includes a first step portion, a second step portion, a third step portion and a forth step potion, which are arranged in this order towards the right side in Fig. 1 from the reduction driven gear 16. The first step portion, arranged the closest to the reduction driven gear 16 at the plural steps formed at the output shaft 15 and having the greatest diameter among diameters of step portions, is supported at an end portion of a boss portion 11 via the first tapered roller bearing 19a. The second step portion, arranged to the right side of the first step portion in Fig. 1 in the axial direction of the output shaft 15, serves as an intermediate portion 15a at which the accommodating groove for attaching the lubricating oil guiding member 20 thereat is formed. Inner races of a spacer 19c and the second tapered roller bearing 19b are fitted at the third step portion arranged to the right side of the second step portion in the axial direction of the output shaft 15 and having a smaller diameter than the diameter of the second step portion. Further, the spacer 19c and the second tapered roller bearing 19b are fixed at the output shaft 15 by a ring nut screwed onto the fourth step portion, having a smaller diameter than the diameter of the third step portion, so as not to be disengaged from the output shaft 15. The third step portion of the output shaft 15 is supported by the end casing portion 10b by fitting an outer race of the second tapered roller bearing 19b into the end casing portion 10b. A portion (not shown) of the output shaft 15 further extending to the right from the fourth step portion in Fig. 1 axially and outwardly protrudes from the end casing portion 10b.

As illustrated in Figs. 1 to 4, the annular accommodating groove 18, whose cross-section is formed substantially in a rectangular-shape, whose lateral side along the axial direction of the output shaft 15 is longer than a side orthogonal thereto, is coaxially formed at an outer circumference of the intermediate portion 15a of the output shaft 15. Further, a pair of annular grooves 18a are formed at a bottom surface of the accommodating groove 18 so as to recess the second step portion of the output shaft 15 and so as to be spaced away from each other in a right-left symmetrical manner in a lateral direction corresponding to the axial direction of the output shaft 15. The pair of the discharge passages 17a, whose outer ends are opened at an intermediate portion of the bottom surface of the accommodating groove 18 in the lateral direction and whose inner ends are opened to the center bore 17 so as to establish a fluid communication, are symmetrically formed at the output shaft 15 in a diametrical direction of the output shaft 15 relative to the axial direction thereof. A pair of recessed portions 18b is formed at the intermediate portion 15a of the output shaft 15 at positions in vicinity of openings of the corresponding discharge passages 17a, which are formed so as to open to the intermediate portion of the bottom surface of the accommodating groove 18, in the lateral direction. Further, a cylindrical bore 12 is coaxially formed at an inner surface of the transmission housing 10 at a position corresponding to the intermediate portion 15a of the output shaft 15 while maintaining a slight clearance therebetween. The first guide passage 13 is formed so as to inwardly extend in a direction orthogonal to the axial direction of the output shaft 15 at an upper portion of a boss portion 11 in Fig. 1, formed at the end casing portion 10b, and the first guide passage 13 is formed at a position corresponding to the discharge passage 17a in the axial direction of the output shaft 15. One end of the first guide passage 13 is opened to the inside of the transmission housing 10, and the other end of the first guide passage 13 is opened to a portion of the cylindrical bore 12 so as to establish the fluid communication. The inner surface of the end casing portion 10b corresponding to the third step portion of the output shaft 15 is formed to have a larger diameter than a diameter of the third step portion of the output shaft 15. As a result, a clearance 14 is formed at the third step portion of the output shaft 15 between the spacer 19c and the inner surface of the end casing portion 10b of the transmission housing 10 corresponding to the third step portion. A second guide passage 14a for discharging the lubricating oil leaked from the lubricating oil guiding member 20 is formed at a lower portion of the clearance 14 in Fig. 1.

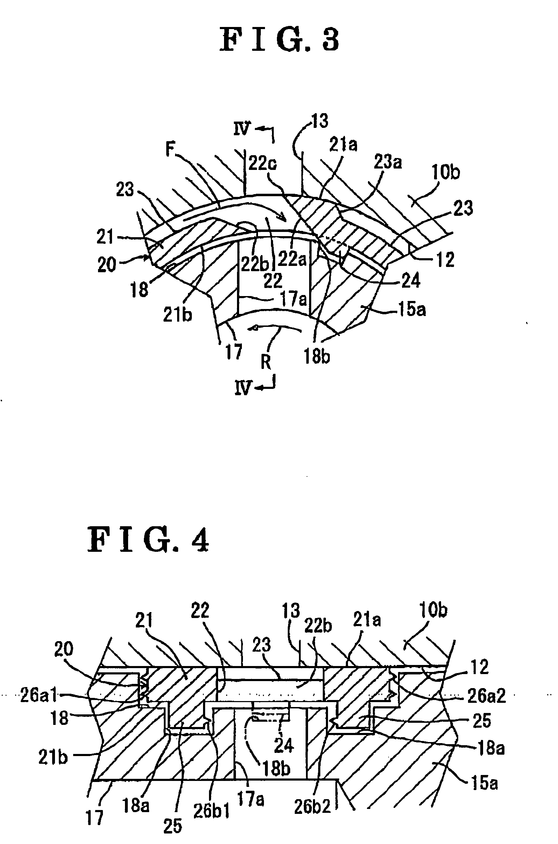

The lubricating oil guiding member 20 is integrally formed with a pair of cylindrical portions 21, to which a pair of annular protrusions 25 are integrally formed respectively, so as to maintain substantially the same distance as a distance between the annular grooves 18a in the lateral direction. An entire width of the lubricating oil guiding member 20 in the axial direction of the output shaft 15 is forme to be narrower than a width of the accommodating groove 18 in the axial direction of the output shaft 15. Further, the pair of cylindrical portions 21 has cross-sections whose heights are substantially the same as a height of the accommodating groove 18 in the direction orthogonal to the axial direction of the output shaft 15. Each of the pair of annular protruding portions 25 is formed to have slightly narrower width than a width of each of the annular groove 18a and to have substantially the same height as a height of each of the annular groove 18a in the direction orthogonal to the axial direction of the output shaft 15. The pair of the annular protruding portions 25 extends inwardly towards the output shaft 15. Further, a pair of guide holes 22 is formed at the lubricating oil guiding member 20 at positions between the annular protruding portions 25 so that the pair of the guide holes 22 substantially oppose to each other in the diametrical direction of the lubricating oil guiding member 20. Each of the guide holes 22 is formed to have a cross-section in a quadrilateral shape in a circumferential direction of the cylindrical portion 21. Further, each of the guide holes 22 includes a forward inner side surface 22a (a first inner side surface) and a rearward inner side surface 22b (a second inner side surface), both of which are formed in flat surface-shapes and which face each other in the circumferential direction of the cylindrical portion 21. The forward inner side surface 22a and the rearward inner side surface 22b are outwardly extended from an inner circumferential surface 21b of each of the cylindrical portion 21 in the radial direction of the lubricating oil guiding member 20. The forward inner side surfaces 22a are surfaces that are moved in a direction towards a side where the guide holes 22a are formed, in a case where the lubricating oil guiding member 20 is rotated in a positive direction (a direction indicated by an arrow R in Fig. 3). An end portion of each of the forward inner side surfaces 22a is connected to an outer circumferential surface 21a of each of the cylindrical portions 21 at a position corresponding to a rear edge portion 22c (edge portion in the left side in Fig. 2) of an opening of the guide hole 22 so as to form an angle (an acute angle in this embodiment) between each of the forward inner side surfaces 22a and the outer circumferential surface 21a of each of the cylindrical portion 21. The outer circumferential surface 21a is a surface arranged at the outer most position in the radial direction of each of the cylindrical portions 21. Therefore, in this embodiment, each of the cylindrical portions 21 includes two outer circumferential surfaces 21a. The rearward inner side surfaces 22b are surfaces that are moved in a direction opposite from the side where the guide holes 22a are formed, in a case where the lubricating oil guiding member 20 are rotated in the direction of arrow R. Each of the rearward inner side surfaces 22b is connected to the outer circumferential surface 21a of each of the cylindrical portion 21 at a position corresponding to an forward edge (edge portion in the right side in Fig. 2) of the opening of the guide hole 22 so as to form an angle (an acute angle in this embodiment) between each of the rearward inner side surface 22b and the inner circumferential surface 21b of each of the cylindrical portion 21.

A pair of guide grooves 23 is formed so as to extend along an outer circumferential surface of the lubricating oil guiding member 20 at a position between the pair of cylindrical portions 21. Each of the guide grooves 23 has a width substantially the same as a width of the guiding holes 22 in the axial direction of the output shaft 15. One end of each of the guide grooves 23 is connected to the corresponding guide groove 22 and the other end of each of the guide grooves 23 ends at corresponding end surface 23a that is integrally formed at the outer circumferential surface 21 a of the cylindrical portion 21 so as to be positioned opposite from the corresponding forward inner side surface 22a in a circumferential direction of the cylindrical portion 21. As mainly illustrated in Fig. 4, a pair of annular-shaped first sealing protrusions 26a1 and 26ab2, which have sharp edges and which slidably and lightly contact a corresponding inner side surface of the accommodating groove 18 in the axial direction of the output shaft 15, are formed at an outer side surface of each of the cylindrical portions 21 (i.e., surfaces arranged at the right and left sides of the cylindrical portion 21 in Fig. 4) facing oppose direction from each other. Further, an annular-shaped second sealing protrusions 26b1 (26b2), which has a sharp edge and which slidably and lightly contacts an inner side surface of each of the annular grooves 18a, is formed at an inner side surface of each of the annular protruding portions 25 facing each other. As illustrated in a lower part in Figs. 1 and 2, the lubricating oil guiding member 20 is formed in a substantially C-shape by providing a cut 20a at a portion thereof in a circumferential direction of the lubricating oil guiding member 20 so as to extend in the axial direction of the output shaft 15. The cut 20a is formed at the portion of the lubricating oil guiding member 20 at a position corresponding to one of the guide holes 22 (the guide hole arranged at a lower portion of the lubricating oil guiding member 20 in Fig. 2 in this embodiment) so that one of edge surfaces of the cut 20a is inclined so as to correspond to an inclination of the forward inner side surface 22a. Further, protrusions 24, which are engageable with the recessed portions 18b formed at the intermediate portion 15a of the output shaft 15, are formed at an inner circumferential surface of the lubricating oil guiding member 20 at a position between the pair of cylindrical portions 21. Each of the protrusions 24 includes a surface that integrally extends towards each of the forward inner side surfaces 22a.

The above-descried lubricating oil guiding member 20 is integrally formed by synthetic resin, having abrasion resistance and elasticity, such as polyacetal resin, polyamide resin and the like, so that a diameter of the cylindrical portion 21 is formed to be slightly larger than a diameter of the cylindrical bore 12. The lubricating oil guiding member 20 is assembled within the accommodating groove 18 so as to be rotated together with the output shaft 15 (rotational shaft) in a manner where: firstly, inserting the third step portion of the output shaft 15, at which only the first tapered roller bearing 19a is attached, through inside the lubricating oil guiding member 20; secondly, outwardly enlarging the cylindrical portion 21 and the annular protrusions 25 by the elasticity of the synthetic resin by applying a force to the lubricating oil guiding member 20 so as to open the cut 20a; thirdly, moving the lubricating oil guiding member 20 towards the input shaft 7 (to the left in Fig. 1) to move over an end portion of the intermediate portion 15a, so that the lubricating oil guiding member 20 is accommodated within the accommodating groove 18; fourthly, positioning each of the protrusions 24 so as to correspond to the position of each of the recessed portions 18b, and then releasing the force applied to the cut 20a, as a result, each of the protrusions 24 is engaged with each of the recessed portion 18b and further, the lubricating oil guiding member 20 is mounted within the accommodating groove 18 so as to be rotated together with the output shaft 15. Therefore, the lubricating oil guiding member 20 is positioned relative to the output shaft 15 (rotational shaft) so that each of the guide holes 22 formed at the lubricating oil guiding member 20 is always connected to each of the discharge passages 17a. Accordingly, the output shaft 15, at which the first tapered roller bearing 19a and the lubricating oil guiding member 20 are attached, is inserted through the cylindrical bore 12 from an inner side of the end casing portion 10b facing the intermediate casing portion 10a (i.e., from the right side in Fig. 1), and then, the spacer 19c and the second tapered roller bearing 19b are inserted along the rotational shaft 15 from an end portion thereof positioned at an outer end side of the end casing portion 10b (i.e. from the right side in Fig. 1). The spacer 19c and the second tapered roller bearing 19b are fastened onto the output shaft 15 by the nut 19d, as a result, the rotational shaft 15 is attached at the end casing portion 10b.

In the above-described embodiment, as the input shaft 7 is rotated relative to the output shaft 15, the needle roller bearing 7a needs to be lubricated, except for a case where the input shaft 7 and the output shaft 15 are directly connected by means of the synchromesh mechanism 9. In this embodiment, in a case where a vehicle is used in a normal condition, i.e. in a case where the vehicle moves forward, the output shaft 15 is rotated in the positive direction (the direction indicated with the arrow R in Figs. 2 and 3), accordingly, the lubricating oil guiding member 20 is rotated in the positive direction together with the output shaft 15. The lubricating oil agitated and spattered by the shift gears within the transmission housing 10 is guided towards inside the guide holes 22 and the guide grooves 23 from the first guide passage 13. A flowing speed of the lubricating oil in the guide holes 22 and the guide grooves 23 differs depending on whether the lubricating oil flows a position closer to the transmission housing 10 or a position closer to the axis of the output shaft 15 because of viscous friction between the lubricating oil flowing in the cylindrical bore 12 of the transmission housing 10, which does not rotate, and the lubricating oil flowing within the guide groove 23. More specifically, the flowing speed of the lubricating oil flowing closer to the transmission housing 10 in the guide holes 2 and he guide grooves 23 is slower than the flowing speed of the lubricating oil flowing closer to the outer circumferential surface of the lubricating oil guiding member 20. Hence, the lubricating oil flowing closer to the transmission housing 10 is led by the lubricating oil flowing closer to the outer circumferential surface of the lubricating oil guiding member 20, as a result, the lubricating oil is moved towards the forward inner side surfaces 22a of the guide holes 22, as indicated with an arrow F in Fig. 3. The end portion of each of the forward inner side faces 22a is connected to the corresponding outer circumferential surface 21a of each of the cylindrical portions 21 at the position corresponding to the rear edge 22c of the opening of the guide hole 22 facing the outer circumferential surface 21a. Each of the forward inner side surfaces 22a forms the acute angle with the outer circumferential surface 21a at the end portion thereof. Therefore, the lubricating oil moved towards the forward inner side surfaces 22a hits vicinities of the end portions of the forward inner side surfaces 22a, which changes a moving direction of the lubricating oil towards an radial inward direction as indicated with the arrow F in Fig. 3, thereby pressurizing the lubricating oil. Further, the pressurized lubricating oil is guided to the center hole 17 through the discharge passages 17a so as to resist against a centrifugal force generated by the rotation of the output shaft 15. Then the pressurized lubricating oil guided to the center hole 17 is diffused in a radial direction of the lubricating oil guiding member 20 by the centrifugal force generated in response to the rotation of the output shaft 15, accordingly, the lubricating oil is supplied to the bearing hole 17b, thereby lubricating the needle bearing 7a. The lubricating oil lubricating the needle bearing 7a is returned within the transmission housing 10 through clearances of each component.

As illustrated mainly in Fig. 4, a slight first clearance is formed between the outer side surface of each of the cylindrical portions 21, at which the first sealing protrusions 26a1 and 26a2 are formed, and each of the inner side surfaces of the accommodating groove 18 facing each other in the axial direction of the output shaft 15. Further, a slight second clearance is formed between each of the annular protruding portions 25 and each of the annular grooves 18a. The first clearances are sealed by means of the annular first sealing protrusions 26a1 and 26a2, which are formed at the outer surfaces of the cylindrical portions 21 and slidably and lightly contact the corresponding inner side surfaces of the accommodating groove 18. The second clearances are sealed by the annular second sealing protrusions 26b1 and 26b2, which are formed at the inner side surfaces of the corresponding annular protruding portions 25 facing each other in the axial direction of the output shaft 15 and slidably and lightly contact the corresponding inner side surfaces of the annular grooves 18a. Therefore, the pressurized lubricating oil existing in a vicinity of a contacting portion between the guide holes 22 and the discharge passages 17a is substantially prevented from leaking from the first and second clearances, and a small leakage of the lubricating oil is returned to the inside of the transmission housing 10 through the second guide passage 14a from the clearance 14 (see Fig. 1). Additionally, the cylindrical portions 21 and the annular protruding portions 25 may be offset to one side in the lateral direction relative to the accommodating groove 18 and the annular grooves 18a because of a manufacturing error, a misassembling of the lubricating oil guiding member 20 relative to the output shaft 15 and the like. In a case where the cylindrical portions 21 and the annular portions 25 is offset towards the first step portion formed at the output shaft 15, a clearance is formed between edge portions of the first and second sealing protrusions 26a1 and 26a2, formed at the outer side surface of the right cylindrical portion 21 in the axial direction of the output shaft 15, and the right side surface of the accommodating groove 18 facing the third step portion of the output shaft 15, however, an edge portion of the second sealing protrusion 26b2 formed at the inner side surface of the right annular protruding portion 25 in Fig. 4 firmly contacts the inner side surface of the right annular groove 18a facing the third step portion of the output shaft 15. Therefore, the lubricating oil is prevented from leaking towards the third step portion at the lubricating oil guiding member 20. Likewise, in a case where the cylindrical portions 21 and the annular portion 25 is offset towards the third step portion formed at the output shaft 15, the second sealing protrusion 26b2 formed at the inner side surface of the left annular protruding portion 25 in Fig. 4 firmly contacts the inner side surface of the left annular groove 18a facing the first step portion of the output shaft 15. Therefore, the lubricating oil is prevented from leaking towards the first step portion at the lubricating oil guiding member 20.

In the above-described embodiment, the lubricating oil guiding member 20 is made of the synthetic resin having the abrasion resistance and the elasticity. Further, the lubricating oil guiding member 20 is formed in the C-shape by providing the cut 20a at one portion thereof so as to extend in the axial direction of the output shaft 15. The outer circumferential surface 21a elastically contacts the inner circumferential surface of the end casing portion 10b corresponding to the second step portion of the output shaft 15. Further, the lubricating oil guiding member 20 is arranged within the accommodating groove 18 so that the cut 20a is positioned at one of the guide holes 22 and so that one end surface of the cut 20a is inclined so as to correspond to the inclination of one of the forward inner side surface 22a. Accordingly, the forward inner side surfaces 22a, which are provided so as to be integrally connected to the outer circumferential surface 21 a of the lubricating oil guiding member 20, specifically which is provided at the most outer circumferential portion of the lubricating oil guiding member 20 in the radial direction thereof, for changing the moving direction of the lubricating oil inwardly, contact the inner circumferential surface of the end casing portion 10b corresponding to the second step portion of the output shaft 15. As a result, the lubricating oil is supplied within the center bore 17 through the discharge passages 17a by changing the moving direction of the lubricating oil inwardly towards the center bore 17 while restricting an amount of leakage of the lubricating oil to be a minimum. However, the lubricating oil supply device of the present invention is not limited to the above-described structure, for example, the cut 20a of the lubricating oil guiding member 20 may be provided at any desired positioned, other than the position corresponding to the guide hole 22, at any desired angle. In a case where the cut 20a of the lubricating oil guiding member 20 is provided at a position, other than the position corresponding to the guide hole 22, by forming an angle, the outer circumferential surface 21a also elastically contacts the inner circumferential surface of the end casing portion 10b corresponding to the second step portion of the output shaft 15, therefore the outer circumferential surface 21 a and the inner circumferential surface of the end casing portion 10b corresponding to the second step portion of the output shaft 15 form very little clearance therebetween, thereby greatly reducing the amount of the lubricating oil, moving through the lubricating oil guiding member 20, leaking outside the lubricating oil guiding member 20.

Alternatively, the lubricating oil guiding member 20 may be made of a material having the abrasion resistance and the elasticity, and the lubricating oil guiding member 20 may be divided into two pieces in the diametrical direction thereof and assembled at the accommodating groove 18. In a case where the divided lubricating oil guiding member 20 is assembled at the accommodating groove 18, a contact between the lubricating oil guiding member 20 and the inner circumferential surface of the cylindrical bore 12, more specifically, the end casing portion 10b corresponding to the second step portion of the output shaft 15, is achieved by the centrifugal force. Therefore, although the lubricating oil guiding member 20 may not firmly contact the cylindrical bore 12, as is the case with the lubricating oil supply device of the above-described embodiment, the lubricating oil, guided to the guide holes 22 and the guide grooves 23 of the lubricating oil guiding member 20, is smoothly directed inwardly in the radial direction thereof by means of the forward inner side surfaces 22a. Then, the lubricating oil is guided to the center bore 17 through the discharge passages 17a so as to resist against the centrifugal force generated by the rotation of the output shaft 15, thereby lubricating the needle roller bearing 7a.

In the above-descried embodiment, the lubricating oil guiding member 20 is configured to be rotated together with the output shaft 15 by engaging the protrusions 24, formed at the inner circumferential surface of the lubricating oil guiding member 20, with the recessed portions 18b formed at the bottom surface of the accommodating grooves 18, respectively. In other words, the structure for simultaneously rotating the lubricating oil guiding member 20 and the output shaft 15 is achieved by the protrusions 24 formed at the inner circumferential surfaces of the lubricating oil guiding member 20 and the recessed portions 18b formed at the bottom surface of the accommodating groove 18, therefore, the structure for simultaneously rotating the lubricating oil guiding member 20 and the output shaft 15 is simplified. Further, the lubricating oil guiding member 20 is assembled relative to the accommodating groove 18 of the rotational shaft 15 in a simple manner where; the lubricating oil guiding member 20 is elastically enlarged in order to be accommodated within the accommodating groove 18 by opening the cut 20a, the positions of the protrusions 24 adjusted relative to the corresponding recessed portions 18b, then the lubricating oil guiding member 20 is restored to the substantially original shape by the elasticity thereof. In the above-descried embodiment, the protrusions 24 are formed at the lubricating oil guiding member 20, and the recessed portions 18b are formed at the rotational shaft 15. Alternatively, a protrusion 24 may be formed at the rotational shaft 15, and a recessed portion 18b may be formed at the lubricating oil guiding member 20. Further, in the above-described embodiment, the protrusions 24 are formed at the inner circumferential surface of the lubricating oil guiding member 20, and the recessed portions 18b are formed at the bottom surface of the accommodating groove 18 of the rotational shaft 15. Alternatively, as long as the protrusion 24 and the recessed portion 18b are structured to engage the lubricating oil guiding member 20 and the output shaft 15 and to rotate the lubricating oil guiding member 20 together with the output shaft 15, the protrusion 24 may be provided at a bottom circumferential surface of each annular protruding portion 25 of each cylindrical portion 21, facing the rotational shaft 15, and a recessed portion 18b may be formed at a bottom surface of each annular groove 18a of the accommodating groove 18.

In the above-described embodiment, the pair of annular protruding portions 25 are provided at the pair of cylindrical portions 21, respectively so that the protruding portions 25 are arranged at the positions corresponding to the both sides of the guide holes 22, formed at the inner circumferential surface of the lubricating oil guiding member 20 at the position between the pair of the cylindrical portions 21, in the axial direction of the rotational shaft 15. Further, the pair of annular grooves 18a for accommodating the corresponding annular protruding portions 25 is formed on the bottom surface of the accommodating groove 18. Accordingly, a contacting force of the lubricating oil guiding member 20 relative to the inner circumferential surface of the end casing portion 10b corresponding to the second step portion of the output shaft 15 is easily adjusted by modifying a size of the annular protruding portions 25 and by adjusting a bending rigidity of the lubricating oil guiding member 20. The lubricating oil supply device of the present invention is not limited to the above-described configuration, but, a contacting force of the lubricating oil guiding member 20 relative to the inner circumferential surface of the end casing portion 10b corresponding to the second step portion of the output shaft 15 at the outer circumferential surface of the lubricating oil guiding member 20 may be adjusted by adjusting the bending rigidity of the lubricating oil guiding member 20, specifically by modifying a thickness of each of the cylindrical portions 21, without providing the annular protruding portions 25.

In the above-described embodiment, the annular first sealing protrusions 26a1 and 26a2, which slidably contact the inner side surfaces of the accommodating groove 18, are formed at the outer surfaces of both cylindrical portions 21 facing the opposite direction from each other. Further, the annular second sealing protrusions 26b1 and 26b2, which slidably contact the corresponding inner side surfaces of the annular grooves 18a, are formed at the inner surfaces of both the annular protruding portions 25 facing each other, respectively. Accordingly, even if the lubricating oil guiding member 20 is offset to one side in the lateral direction (i.e. in the axial direction of the rotational shaft 15) because of the manufacturing error, the misassembling and the like, and he leakage of the lubricating oil is surely prevented. The lubricating oil supply device of the present invention is not limited to the above-described configuration, but one of or both of the first and the second sealing protrusions 26a1, 26a2 and 26b1, 266b2 may be eliminated from the cylindrical portions 21 by improving a sealing effect and function, or by improving a manufacturing accuracy, an assembling accuracy and the like.

In the above-described embodiment, a case where the lubricating oil is supplied to the center bore 17 provided at the output shaft 15 of the transmission apparatus is described. In this case, lubrication of the needle roller bearing 7a, which is provided between the input shaft 7 and the output shaft 15 and at which a lack of lubrication occurs because the needle roller bearing 7a is arranged at a position hard to be lubricated, is appropriately and surely achieved. The lubricating oil supply device of the present invention is not limited to the above-described configuration, but the lubricating oil supply device may be configured to supply the lubricating oil to a center bore provided at, for example, the input shaft 7, the counter shaft and the like of other components of a vehicle necessitating lubrications. Accordingly, the lubricating oil supply device of the present invention is adaptable to the shift gears, the synchromesh mechanisms and the like rotatably provided at, for example, the input shaft 7, the counter shaft and the like.

Accordingly, although the lubricating oil guiding member 20 is rotated together with the output shaft 15, the flowing speed of the lubricating oil flowing closer to the transmission housing 10 is slowed relative to the flowing speed of the lubricating oil flowing closer to the outer circumferential surface of the lubricating oil guiding member 20 because of the viscous friction generated between the lubricating oil existing within the rotating lubricating oil guiding member 20 and the lubricating oil existing within the cylindrical bore 12. As a result, the lubricating oil is moved towards the forward inner side surfaces 22a formed at the corresponding guide holes 22 when the output shaft 15 is rotated in the positive direction. The lubricating oil hits the forward inner side surfaces 22a, which is connected to the outer circumferential surface 21a of each of the cylindrical portions 21 and forms the acute angle relative to the outer circumferential surface 21a thereof, so that the lubricating oil is smoothly directed inwardly in the radial direction thereof. Accordingly, the lubricating oil is guided to the center bore 17 through the discharge passages 17a so as to resist against the centrifugal force generated by the rotation of the output shaft 15, thereby lubricating the needle roller bearing 7a. Further, only the lubricating oil guiding member 20 is additionally provided at the conventional lubricating oil supply device. Therefore, the lubricating oil supply device appropriately and surely lubricating the needle roller bearing 7a is achieved with a few additional manufacturing costs.

According to the embodiment, the lubricating oil guiding member 20 is rotated with the rotational shaft 15 by engaging the protrusions 24 or a recessed portion, formed at the inner circumferential surface of the lubricating oil guiding portion 20 or the cylindrical portion 21, with the recessed portions 18b or a protrusion, formed at the bottom surface of the accommodating groove 18 or a portion of the accommodating groove 18 corresponding to the cylindrical portion 21.

The lubricating oil guiding member 20 is simultaneously rotated with the output shaft 15 by engaging the protrusions 24 or a recessed portion, formed at the inner circumferential surface of the lubricating oil guiding member 20 or formed at the bottom surface of the protruding portion 25 facing the output shaft, with the recessed portions 18b or a protrusion, formed at the bottom portion of the accommodating groove 18 or the bottom portion of the annular groove 18a. Accordingly, the connecting structure of the lubricating oil guiding member 20 relative to the output shaft 15 is achieved with a simple structure. Further, the lubricating oil guiding member 20 is structured to be rotated with the output shaft 15 when the lubricating oil guiding member 20 is assembled on the output shaft 15 only by engaging the protrusions 24 and the recessed portions 18b.

According to the embodiment, the lubricating oil guiding member is made of the synthetic resin, having the abrasion resistance and the elasticity, and is formed in the C-shape by providing the cut 20a at a portion of the lubricating oil guiding member 20 in the circumferential direction thereof so that the cut 20a extends in the axial direction of the output shaft 15, so that the lubricating oil guiding member 20 elastically contacts the inner circumferential surface of the end casing portion 10b corresponding to the position where the cylindrical bore 12 is formed.

The lubricating oil guiding member 20 is made of the synthetic resin having the abrasion resistance and the elasticity. Further, the lubricating oil guiding member 20 is formed to have the C-shape by providing the cut 20a thereat, and the outer circumferential surface of the lubricating oil guiding member 20 elastically contacts the inner circumferential surface of the end casing portion 10b corresponding to the second step portion of the output shaft 15, thereby forming very little clearance therebetween. As a result, the amount of the lubricating oil, moving through the lubricating oil guiding member 20, leaking outward therefrom is greatly reduced.

According to the embodiment, the cut 20a is provided at the position corresponding to one of the guide hole 22 formed at the lubricating oil guiding member 20 so that one end surface of the cut 20a is arranged so as to correspond to the forward inner side surface 22a.

The cut 20a is formed at the position corresponding to one of the guide holes 22 so that one side surface of the cut 20a is inclined so as to correspond to the inclination of one of the forward inner side surfaces 22a. Accordingly, the forward inner side surfaces 22a, which are connected to the corresponding outer circumferential surfaces 21a that are formed at the outermost positions in the radial direction of the cylindrical portions 22 and which changes the moving direction of the lubricating oil inwardly in the radial direction of the lubricating oil guiding member 20, closely contact the inner circumferential surface of the inner circumferential surface of the end casing portion 10b corresponding to the second step portion of the output shaft 15. Therefore, the lubricating oil is effectively directed inwardly in the radial direction of the lubricating oil guiding member 20 while reducing the amount of leakage of the lubricating oil to a minimum.

According to the embodiment, the lubricating oil guiding member 20 includes two of the cylindrical portions 21 extending along the circumferential direction of the lubricating oil guiding member 20, the pair of annular protruding portions 25 is provided at the inner circumferential surface of the pair of cylindrical portions 21, respectively, so as to extend along both sides of the guide holes 22, and the pair of annular grooves 18a is formed at the bottom surface of the accommodating groove 18 for accommodating the pair of the annular protruding portions 25, respectively.

The pair of annular protruding portions 25 protruding inwardly in the radial direction of the lubricating oil guiding member 20 is provided at the pair of the cylindrical portions 21, respectively, so as to be arranged at the positions corresponding to the both sides of the guide holes 22. Further, the pair of annular grooves 18a for accommodating the corresponding annular protruding portions 25 is formed at the bottom surface of the accommodating groove 18. Accordingly, the contacting force of the outer circumferential surface of the lubricating oil guiding member 20 relative to inner side surface of the end casing portion 10b corresponding to the second step portion of the output shaft 15 is easily modified by modifying the size of the annular protruding portions 25.

According to the embodiment, at least one of the outer side surfaces of the pair of cylindrical portions 21 facing opposite direction from each other is provided with the first sealing protrusion 26a1 and 26a2 that are formed in the annular-shapes and slidably contact the corresponding inner side surfaces of the accommodating grove 18, and at least one of the inner side surfaces of the annular protruding portions 25 facing each other is provided with the second sealing protrusion 26b1 (26b2) that is formed in the annular-shape and slidably contacts the corresponding inner side surface of the annular groove 18a facing the other inner side surface of the annular groove 18a.

The pair of first sealing protrusions 26a1 and 26a2, which slidably contact one of the inner side surfaces of the accommodating groove 18 facing each other in the axial direction of the output shaft 15, is formed at the outer side surface of each of the cylindrical portions 21 facing opposite direction from each other in the axial direction of the output shaft 15. Further, the second sealing protrusions 26b1 and 26b2, which slidably contact the inner side surfaces of the annular grooves 18a, respectively, are formed at the inner side surfaces of the annular protruding portions 25, respectively. Accordingly, in a case where the lubricating oil guiding member 20 is offset to one side in the axial direction of the output shaft 15 relative to the accommodating groove 18 and where either one of the pair of the first sealing protrusions 26a1 and 26a2 is positioned away from the corresponding inner side surface of the accommodating groove 18, the second sealing protrusions 26b1 or 26b2 formed at the annular protruding portion 25 corresponding to the one of the pair of the first sealing protrusions 26a1 and 26a2 contacts the corresponding inner side surface of the annular groove 18. As a result, leakage of the lubricating oil, occurring due to the offset of the lubricating oil guiding member 20 to one side in the axial direction of the output shaft 15, is prevented from occurring.

According to the embodiment, the center bore 17 is provided at the output shaft 15 so as to open to the inner end surface thereof, the bearing hole 17b having the larger diameter than the diameter of the center bore 17 is formed at the position where the center bore 17 opens to the inner end surface of the output shaft 15, and the end portion of the input shaft 7, arranged in the coaxial manner with respect to the output shaft 15, is rotatably supported at the bearing hole 17b via the needle roller bearing 7a, thereby transmitting a shifted rotation of the input shaft 7 to the output shaft 15.

The output shaft 15 includes the center bore 17 opening to the inner end surface of the output shaft 15. Further, the end portion of the input shaft 7 coaxially arranged relative to the output shaft 15 is rotatably supported at the bearing hole 17b, which is formed at the opening of the center bore 17 so as to spatially and integrally extend towards the center bore 17 and which is formed to have a larger diameter than a diameter of the center bore 17, via the needle roller bearing 7a, so that the shifted rotation of the input shaft 7 is transmitted to the output shaft 15. Accordingly, the needle roller bearing 7a, which is provided between the output shaft 15 and the input shaft 7 and at which a lack of lubrication occurs because the lubricating oil is hard to be supplied thereto, is appropriately lubricated.

## Claims

1. A lubricating oil supply device comprising:
a casing (10);
a rotational shaft (15) rotatably supported by the casing (10);
a center bore (17) formed at the rotational shaft (15);
an accommodating groove (18) formed at an outer circumference of an intermediate portion (15a) of the rotational shaft (15) in an annular-shape;
a cylindrical bore (12) coaxially formed in the casing (10) relative to the rotational shaft (15), the cylindrical bore (12) formed in the casing (10) at a position corresponding to the intermediate portion (15a) of the rotational shaft (15);
a guide passage (13) radially extending through a portion of the casing (10) so that one end of the guide passage (13) opens to an inside of the casing (10) and the other end of the guide passage (13) opens to a portion of the cylindrical bore (12);
a discharge passage (17a) formed at the rotational shaft (15) at a position corresponding to a position where the guide passage (13) is formed, one end of the discharge passage (17a) opening to a bottom surface of the accommodating groove (18) and the other end of the discharge passage (17a) opening to the center bore (17) of the rotational shaft (15); and
a lubricating oil guiding member (20) accommodated within the accommodating groove (18) and including a cylindrical portion (21), which extends in a circumferential direction, the lubricating oil guiding member (20) rotated with the rotational shaft (15) so as to slidably contact the cylindrical bore (12) at an outer circumferential surface of the cylinder portion (21), wherein
the lubricating oil guiding member (20) further includes a guide hole (22), which has a first inner side surface (22a) and a second inner side surface (22b) facing each other in the circumferential direction of the lubricating oil guiding member (20), so that the guide hole (22) is always connected to the discharge passage (17a) to establish the fluid communication therebetween,
the first inner side surface (22a) is connected to an outer circumferential surface (21a) of the cylindrical portion (21) so as to form an angle therebetween, and
the lubricating oil guiding member further (20) includes a guide groove (23) extending along the outer circumferential surface of the lubricating oil guiding member (20) and ending at an end surface formed at the lubricating oil guiding member (20) at a position away from the first inner side surface (22a), the guide groove (23) is connected to the guide hole (22) at a portion where the second inner side surface (22b) is formed so as to establish the fluid communication therebetween.

2. The lubricating oil supply device for supplying lubricating oil according to Claim 1, wherein the lubricating oil guiding member (20) is rotated with the rotational shaft (15) by engaging a protrusion (24) or a recessed portion, formed at an inner circumferential surface of the lubricating oil guiding portion (20) or the cylindrical portion (21), with a recessed portion (18b) or a protrusion, formed at the bottom surface of the accommodating groove (18) or a portion of the accommodating groove (18) corresponding to the cylindrical portion (21).

3. The lubricating oil supply device for supplying lubricating oil according to Claim 1 or Claim 2, wherein the lubricating oil guiding member (20) is made of synthetic resin, having abrasion resistance and elasticity, and is formed in a C-shape by providing a cut (20a) at a portion of the lubricating oil guiding member (20) in the circumferential direction thereof so that the cut (20a) extends in the axial direction of the rotational shaft (15), so that the lubricating oil guiding member (20) elastically contacts the inner circumferential surface of the casing (10) corresponding to a position where the cylindrical bore (12) is formed.

4. The lubricating oil supply device according to Claim 3, wherein, the cut (20a) is provided at a position corresponding to the guide hole (22) formed at the lubricating oil guiding member (20) so that one end surface of the cut (20a) is arranged so as to correspond to the first inner side surface (22a).

5. The lubricating oil supply device according to Claim 3 or Claim 4, wherein the lubricating oil guiding member (20) includes two of the cylindrical portions (21) extending along the circumferential direction of the lubricating oil guiding member (20), a pair of annular protruding portions (25) is provided at an inner circumferential surface of the pair of cylindrical portions (21), respectively, so as to extend along both sides of the guide hole (22), and a pair of annular grooves (18a) is formed at the bottom surface of the accommodating groove (18) for accommodating the pair of the annular protruding portions (25), respectively.

6. The lubricating oil supply device according to Claim 5, wherein at least one of outer side surfaces of the pair of cylindrical portions (21) facing opposite direction from each other is provided with a first sealing protrusion (26a1, 26a2) that is formed in an annular-shape and slidably contacts a corresponding inner side surface of the accommodating grove (18), and at least one of inner side surfaces of the annular protruding portions (25) facing each other is provided with a second sealing protrusion (26bl, 26b2) that is formed in an annular-shape and slidably contacts a corresponding inner side surface of the annular groove (18a) facing inward the lubricating oil guiding member (20).

7. The lubricating oil supply device according to any one of Claims 1 to 6, wherein the center bore (17) is provided at the rotational shaft (15) so as to open to an inner end surface thereof, a bearing hole (17b) having a larger diameter than a diameter of the center bore (17) is formed at a position where the center bore (17) opens towards the inner end surface of the rotational shaft (15), and an end portion of another rotational shaft (7), arranged in the coaxial manner with respect to the rotational shaft (15), is rotatably supported at the bearing hole (17b) via a bearing (7a), thereby transmitting a shifted rotation of the another rotational shaft (7) to the rotational shaft (15).

8. The lubricating oil supply device according to any one of Claims 1 to 7, wherein the first inner side surface (22a) is connected to the outer circumferential surface (21b) of the cylinder portion (21) and forms an acute angle relative to the outer circumferential surface (21b) at an edge portion of the first inner side surface (22a).
